# EUROPÄISCHE PATENTSCHRIFT

(11) **EP 0 887 006 B1**
(45) Veröffentlichungstag und Bekanntmachung des Hinweises auf die Patenterteilung: **18.12.2002**
(21) Anmeldenummer: 98110860.8
(22) Anmeldetag: 13.06.1998
(51) Int. Cl.: A01D 34/73

(54) **Schild und Mähteller**
Shield and mower disc
Bouclier et disque pour faucheuse

(30) Priorität: 26.06.1997 US 883609
(43) Veröffentlichungstag der Anmeldung: 30.12.1998
(73) Patentinhaber: DEERE & COMPANY, Moline, Illinois 61265-8098 (US)
(72) Erfinder: Richardson, Craig Allen, Ottumwa, Iowa 52501 (US); Verhulst, Michael Joseph, Ottumwa, Iowa 52501 (US); Rosenbalm, Allan Wesley, Blakesburg, Iowa 52536 (US)
(74) Vertreter: Magin, Ludwig Bernhard

(56) Entgegenhaltungen:
- EP-A- 0 379 001
- AU-A- 4 528 064
- GB-A- 2 089 637
- US-A- 3 665 692
- US-A- 4 531 349
- US-A- 5 036 654

## Beschreibung

Die Erfindung betrifft einen Schild zur lösbaren Montage auf einen Befestigungsbereich eines Mähtellers und einen Mähteller selbst.

Aus der US-A-4,183,196, sind dreieckige Mähteller bekannt, die in jedem Eckbereich jeweils eine Hülse einstückig aufweisen, die von einer Schraube zur Befestigung jeweils einer Mähklinge durchdrungen wird.

Die US-A-3,716,973 zeigt eine vertikal ausgerichtete Trommel, von der sich radial und mit einer Neigung nach unten Arme erstrecken, an deren außenliegendem Endbereich ein Kragen angegossen oder angeschmiedet ist, in dem die Schraube für die Mähklinge aufgenommen ist.

Diese bekannten Ausführungen haben zum Ziel den Befestigungsbereich des Mähtellers in der Verschleißzone zu verstärken und die Schraube vor Hindernissen zu schützen.

Die AU-45280/64 offenbart einen Mähteller mit einem ausgesparten Randbereich, in dem eine Mähklinge mittels einer Schraube pendelnd befestigt werden kann. Als Verdrehsicherung für die Schraube ist eine Lasche vorgesehen, die einerseits die Schraube drehfest aufnimmt und andererseits mittels eines Kragens an dem Rand des Mähtellers drehfest gehalten wird. Infolgedessen soll die Bohrung in dem Mähteller vor Beschädigungen bewahrt werden.

Diese bekannte Vorrichtung ist insofern nachteilig, als die sensiblen Bereiche, wie Schraube und Pendelbereich der Mähklinge äußeren Einflüssen ausgesetzt und somit gefährdet sind.

Das der Erfindung zugrunde liegende Problem wird in der aufwendigen Herstellung der bekannten Mähteller bzw. der Anfälligkeit gegen äußere Einwirkungen gesehen.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise bedarf es keiner Änderung eines bekannten Mähtellers, sondern es wird auf einen herkömmlichen Mähteller lediglich der erfindungsgemäße Schild aufgesteckt und die Mähklinge mit ihm an dem Tellerkörper befestigt. Auf diese Weise kann ein optimaler Schutz des Mähtellers bei schneller Montage und Austauschbarkeit des Schildes erreicht werden. Der Befestigungsbereich des Mähtellers wird sowohl an der Unterseite, wie auch an der Oberseite geschützt, wenn der Schild den entsprechenden Abschnitt des Mähtellers mit einem Schlitz übergreift. Ein weiterer Schutz des Mähtellers an der Außenseite erfolgt, wenn beide Segmente von einem Schutz zusammengehalten werden, der die Außenkante des Mähtellers an der entsprechenden und somit außenliegenden Fläche übergreift. Die Ausnehmung schützt die Schraube bzw. die Mutter vor mechanischen Einwirkungen von außen.

Die Montage und Handhabung des Schildes erfolgt auf einfachste Weise, wenn dieser einstückig ausgebildet ist und als ein einziger Teil auf den Mähteller aufgeschoben und befestigt werden kann.

Allerdings hat eine getrennte Ausbildung der Segmente den Vorteil, daß bei Verschleiß oder Beschädigung nur das betreffende Segment ausgetauscht zu werden braucht, was die Wartungskosten reduziert.

Die Verwendung einer insbesondere sechskantigen Aufnahme hat die gute Wirkung, daß damit der Kopf oder die Mutter einer Schraube gegen Drehung gesichert werden kann, so daß es keines zusätzlichen Werkzeugs bedarf.

Generell kann ein derartiger Schild an vielen Maschinen verwendet werden, z. B. an Bodenbearbeitungswerkzeugen, insbesondere Kreiseleggen, Schneidwerken von Ladewagen, und dergl., d. h. an Geräten, deren Befestigungsbereiche äußeren Be-lastungen ausgesetzt sind.

Von sehr großem Nutzen, sowohl in der Herstellung, wie auch in der Wartung, ist die Verwendung des Schildes an Mähtellern, da diese bei hohen Drehgeschwindigkeiten und bei der Beaufschlagung durch Sand und Pflanzensäfte hohem Verschleiß und hohen Beanspruchungen ausgesetzt sind. Da sich die Montage der Schilde einfach gestaltet, können diese bei jedem Mähklingenwechsel mit ausgetauscht werden. Der einfache Aufbau der Schilde läßt deren Massenproduktion und somit geringe Herstellungskosten zu. Dadurch wird die Sicherheit der Mähteller erheblich gesteigert.

Ein symmetrischer Aufbau der Mähteller, der wiederum geringere Fertigungskosten verspricht, wird durch eine diametrale Anordnung der Befestigungsbereiche erreicht.

Die Verbindung des Schildes kann auf einfachste Weise zusammen mit der Mähklinge mittels derselben Schraube erfolgen und gestaltet sich einfach, wenn der Schild mittels des Schlitzes radial einwärts aufgeschoben werden kann.

Eine Serienfertigung des Mähteller wird durch dessen Herstellung aus einem Festen Blech erreicht, das entsprechend gepreßt werden kann. Zudem wird eine verschleißarme Lagerung erreicht, in dem sich die Befestigungsbereich und mit ihnen die Mähklingen radial erstrecken und somit die Zentrifugalkräfte keine axiale Komponente entwickeln.

In der Zeichnung ist ein nachfolgend näher beschriebenes Ausführungsbeispiel der Erfindung dargestellt. Es zeigt:
- Fig. 1: einen Mähteller mit einem Mähmesser und einem zugeordneten Schild in Draufsicht,
- Fig. 2: einen Vertikalschnitt durch den Mähteller nach Figur 1 entlang der Linie 2-2 und in der Blickrichtung der dazugehörigen Pfeile,
- Fig. 3: den Schild aus Figur 1 in vergrößerter Darstellung und in Seitenansicht,
- Fig. 4: den Schild aus Figur 1 in vergrößerter Darstellung und in einer Ansicht von unten und
- Fig. 5: einen zweiteiligen Schild in vergrößerter Darstellung und in Seitenansicht.

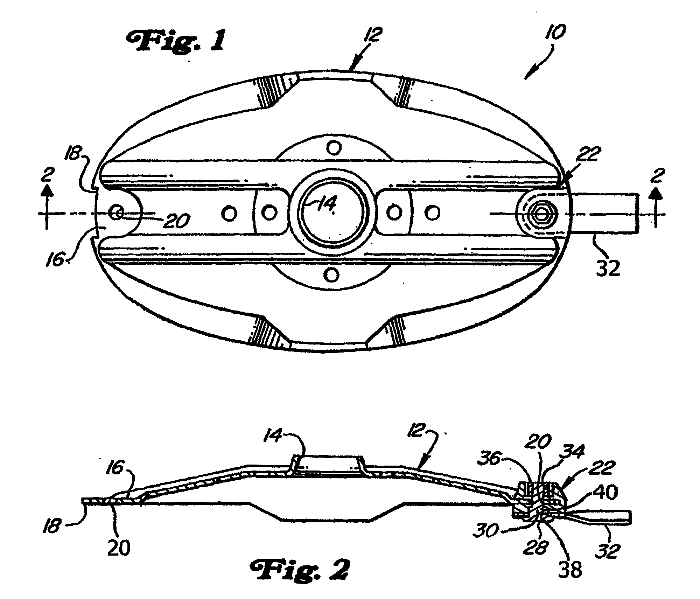

In den Figuren 1 und 2 ist ein Mähteller 10 gezeigt, der mit einer Vielzahl gleicher Mähteller 10 entlang eines nicht gezeigten Mähbalkens montiert ist, wobei der Mähbalken ein Gehäuse darstellt, das ein Zahnradgetriebe zum Drehen einer Vielzahl aufrechter Antriebswellen enthält, die den jeweiligen Mähtellern 10 zugeordnet sind. Die Mähteller 10 enthalten einen Tellerkörper 12, der in der Draufsicht oval geformt ist und ein zentrisches kreisförmiges Loch 14 aufweist, das entweder einen Durchsatz einer Eingangswelle zu dem Zahnradgetriebe in dem Mähbalken oder der Aufnahme des oberen Endes der Antriebswelle des Mähtellers 10 dient. Der Tellerkörper 12 enthält ein Paar flacher Befestigungsbereiche 16 für Mähmesser, die sich von diametral gegenüberliegenden Kerben 18 an Stellen des Umfangs jeweils radial nach innen erstrecken. Die Stellen des Umfangs befinden sich entlang einer Hauptachse des Tellerkörpers 12. Die Befestigungsbereiche 16 sind jeweils in Seitenansicht horizontal, d. h. sie befinden sich in einer Ebene, die sich senkrecht zu der Drehachse des Tellerkörpers 12 erstreckt. Die Befestigungsbereiche 16 befinden sich in Draufsicht innerhalb einer U-förmigen Umgrenzung, deren geschlossener Endbereich halbkreisförmig ausgebildet und sind konzentrisch zu einem Loch 20 in dem Befestigungsbereich 16 angeordnet. Wie aus der nachfolgenden Beschreibung hervorgeht, könnte die vorliegende Erfindung genauso gut an Mähscheiben 10 angewendet werden, die mehr als zwei Mähklingen benutzen, z. B. wie in der US-A-4,183,196, oder an Mähtellern 10 oder Armkreuzen, deren Befestigungsbereiche gegenüber der Horizontalen geneigt sind, z. B. wie in der US-A-3,716,973.

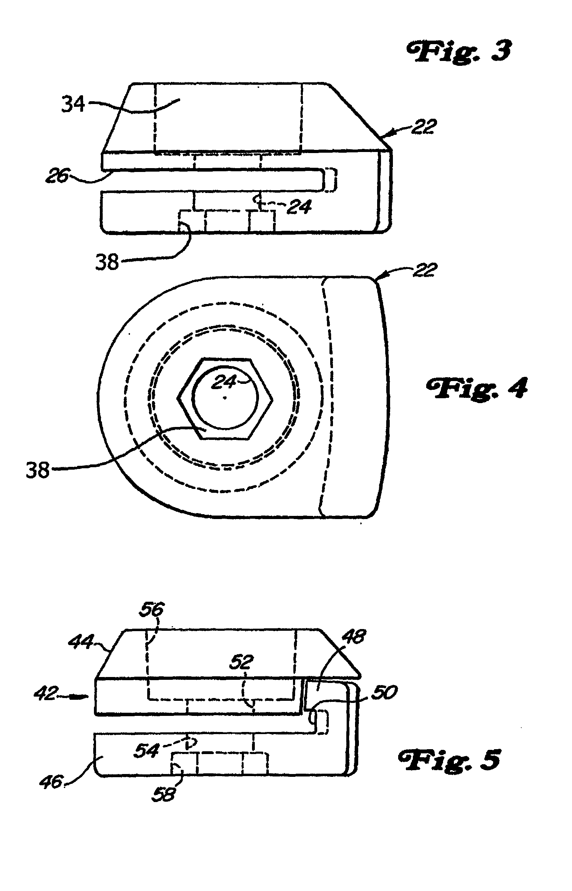

Ein Paar identischer austauschbarer Schilde 22, von denen nur einer montiert gezeigt ist, die den Gegenstand der vorliegenden Erfindung bilden, sind jeweils vorgesehen, um den Tellerkörper 12 in der Gegend der Befestigungsbereiche 16 zu verstärken. Es wird hier darauf hingewiesen, daß diese Schilde aus einem hoch verschleißfesten Material gebildet sein können. Im weiteren wird Bezug auf das in den Figuren 3 und 4 Gezeigte genommen, in denen zu sehen ist, daß jeder Schild 22, sowohl aus der Ansicht von oben wie auch von unten, wie dies jeweils in den Figuren 1 und 4 gezeigt ist, ergänzend zu einem zugeordneten Befestigungsbereich 16 ausgebildet ist. Eine Bohrung 24 erstreckt sich konzentrisch zu einem halbkreisförmigen Umkreis des Schilds 22 vertikal durch den Schild 22. Die Bohrung 24 wird von einem horizontalen Schlitz 26 durchdrungen, der in dem Schild 22 vorgesehen ist, um sich so von dem halbkreisförmigen Umkreis des Schilds zu seinem gegenüberliegenden Ende auf einer Höhe zu erstrecken, die ungefähr ein Drittel des Schilds 22 unterhalb und zwei Drittel des Schilds 22 oberhalb des Schlitzes 26 beläßt, wobei der obere und der untere Bereich des Schilds 22 von einem äußeren Umkreisabschnitt des Schilds 22 zusammengefügt sind. Der Schild 22 wird derart auf dem Tellerkörper 12 plaziert, daß der Befestigungsbereich 16 in dem Schlitz 26 aufgenommen und das Loch 20 des Tellerkörpers 12 an der Bohrung 24 ausgerichtet. Der Schild 22 ist geringfügig schmaler als die Kerbe 18 in dem Tellerkörper 12, und der Teil des Schilds 22, der sich außerhalb des Schlitzes 26 befindet, wird in der Kerbe 26 aufgenommen. Eine Schraube 28 zum Montieren der Mähklinge besitzt einen zylindrischen Teil 30, der sich nahe eines flachen Schraubenkopfes befindet und auf dem eine Mähklinge 32 zur freien Schwenkbewegung montiert ist. Die Schraube 28 erstreckt sich aufwärts durch die Bohrung 24 und das Loch 20, wobei die Bohrung 24 einen vergrößerten oberen Abschnitt enthält, der eine im wesentlichen zylindrische Aufnahme 34 bildet, die eine Mutter 36, die auf das obere Ende der Schraube 28 aufgeschraubt wird, aufnimmt. Um zu vermeiden, daß sich die Schraube 28 gegenüber dem Schild 22 dreht und zum Vereinfachen des Anziehens oder Lösens der Mutter 36 auf oder von der Schraube 28 hat die Bohrung 24 einen vergrößerten Bodenbereich, der eine sechseckige Aufnahme 38 bildet, und die Schraube 28 besitzt einen ergänzend ausgebildeten Bereich 40, der sich nahe des zylindrischen Teils 30 befindet und in der Aufnahme 38 aufgenommen ist.

Es wird daher erkenntlich, daß der Bereich des Schilds 22, der oberhalb des Tellerkörpers 12 angeordnet ist, nicht nur dem Schutz der Mutter 36 dient, sondern auch zum Schutz der oberen Fläche des flachen Befestigungsbereichs 16 des Tellerkörpers 12, während der Teil des Schilds, der sich unterhalb des Befestigungsbereichs 16 befindet, dem Schutz der unteren Fläche des Befestigungsbereichs 16 dient, und die auf dem Umfang liegende Kante des Befestigungsbereichs 16 wird von dem äußeren Abschnitt des Schilds 22 geschützt, der den oberen mit dem unteren Teil des Schilds 22 verbindet.

Es wird nun Bezug genommen auf Figur 5, die einen zweiteiligen Schild 42 zeigt, wie er als Alternative zu dem oben beschriebenen einteiligen Schild 22 benutzt werden kann. Wenn es hier auch nicht beschrieben ist, so hat der Schild 42 aus der Ansicht von oben oder unten im einzelnen doch eine Form entsprechend der des Schilds 22. Der Schild 42 ein separates oberes und unteres Segment 44 bzw. 46, die hier so gezeigt sind, als wären sie auf den Tellerkörper 12 montiert, wobei das obere bzw. untere Segment 44 bzw. 46 jeweils mit der oberen und der unteren Fläche eines der Befestigungsbereiche 16 in Anlage geraten. Zum Schutz der äußeren Kante des zugehörigen Befestigungsbereichs 16 des Tellerkörpers 12 enthält das untere Segment 46 des Schilds 42 eine erhabene zurücklaufende Lippe 48, die eine Nut 50 zur Aufnahme des Kantenbereichs des Befestigungsbereichs 16 bildet, der den Grund der Kerbe 18 bildet. Das obere und das untere Segment 44, 46 des Schilds 42 sind mit entsprechenden Bohrungen 52 und 54 versehen, die dann, wenn die Segmente 44, 46 auf den Tellerkörper 12 montiert sind, aneinander und mit dem Loch 20 des zugeordneten Befestigungsbereichs 16 des Tellerkörpers 12 ausgerichtet sind. Die Bohrung 52 des oberen Segments 44 weist einen vergrößerten oberen Endbereich auf, der eine im wesentlichen zylindrische Kammer 56 zur Aufnahme der Mutter 36 einer zugeordneten Schraube 28 bildet, während die Bohrung 54 des unteren Segments 46 einen vergrößerten unteren Endbereich besitzt, der eine sechseckige Aufnahme 58 bildet, die der Aufnahme des ergänzend geformten Bereichs der Schraube 28 dient.

Es wird daraus erkenntlich, daß der zweiteilige Schild 42 genau das gleiche leistet wie der einteilige Schild 22, und zwar indem er den zugelegenen Befestigungsbereich 16 des Tellerkörpers 12 verstärkt und bei Verschleiß leicht austauschbar ist. Jedoch ergibt der Schild 42 die Möglichkeit, daß nur ein Segment 44, 46 ausgetauscht werden muß anstelle des gesamten Schilds 22, wie es bei dem einstückigen Schild 22 der Fall wäre, wenn eine dessen Fläche zu sehr zerschlissen wäre.

## Patentansprüche

1. Schild (22, 42) zur lösbaren Montage auf einem Befestigungsbereich (16) eines Mähtellers (10) mit einer Bohrung (24) zur Aufnahme einer Schraube (28), die der Verbindung einer Mähklinge mit einem Mähteller (10) dient, mit einem oberen und einem unteren Segment (44, 46), die zwischen sich eine Öffnung, insbesondere einen Schlitz (26) belassen, in dem der Befestigungsbereich (16) aufnehmbar ist, mit einem Schutz für eine radial außen liegende Kante des Befestigungsbereichs (16) im Bereich der Verbindung des oberen und unteren Segments (44, 46) und mit einer Aufnahme (34, 38, 58) für wenigstens einen Teil der Schraube (28).

2. Schild nach Anspruch 1, **dadurch gekennzeichnet, daß** beide Segmente (44, 46) einstückig ausgebildet sind.

3. Schild nach Anspruch 1, **dadurch gekennzeichnet, daß** beide Segmente (44, 46) getrennt ausgebildet sind.

4. Schild nach einem oder mehreren der vorherigen Ansprüche, **dadurch gekennzeichnet, daß** wenigstens eines der Elemente (44, 46) eine sechskantige Aufnahme (38) zur drehfesten Halterung der Schraube (28) oder einer auf die Schraube (28) aufsetzbaren Mutter (36) enthält.

5. Mähteller (10) mit wenigstens einem Befestigungsbereich (16), wenigstens einer Mähklinge und wenigstens einer Schraube (28) die sich zur Festlegung der Mähklinge durch ein Loch (20) in dem Befestigungsbereich (16) erstreckt, **gekennzeichnet durch** einen Schild (22, 42) nach einem oder mehreren der vorherigen Ansprüche, der mittels der Schraube (28) auf dem Befestigungsbereich (16) festgelegt ist und diesen an wenigstens einer Seite bedeckt.

6. Mähteller nach Anspruch 5, **dadurch gekennzeichnet, daß** er oval ausgebildet ist und zwei Befestigungsbereiche (16) an diametral gegenüberliegenden Stellen des Umfangs aufweist.

7. Mähteller nach Anspruch 5 oder 6, **dadurch gekennzeichnet, daß** der Schild (22, 42), radial von außen nach innen auf den Befestigungsbereich (16) aufschiebbar ist und Bohrungen (24, 52, 54) aufweist, die mit einem Loch (20) in dem Tellerkörper (12) in Fluchtung bringbar sind und der Aufnahme der Schraube (28) dienen.

8. Mähteller nach einem der Ansprüche 5 bis 7, **dadurch gekennzeichnet, daß** der Tellerkörper (12) aus Blech geformt ist und radial verlaufende Befestigungsbereiche (16) aufweist.

## Claims

1. A shield (22, 42) for fitting releasably on a fixing region (16) of a mower disc (10), with a bore (24) for reception of a screw (28), which serves to connect a mower blade to a mower disc (10), with upper and lower segments (44, 46) which leave an opening, in particular a slot (26) between them, in which the fixing region (16) can be received, with a guard for a radially outer lying edge of the fixing region (16) in the region of the connection of the upper and lower segments (44, 46) and with a recess (34, 38, 58) for at least a part of the screw (28).

2. A shield according to claim 1, **characterized in that** both segments (44, 46) are formed in one piece.

3. A shield according to claim 1, **characterized in that** both segments (44, 46) are made separate from one another.

4. A shield according to one or more of the preceding claims, **characterized in that** at least one of the elements (44, 46) has a hexagonal recess (38) for rotationally fast retention of the screw (28) or a nut (36) which can be fitted on the screw (28).

5. A mower disc (10) with at least one fixing region, at least one mower blade and at least one screw (28) which extends through a hole (20) in the fixing region (16) to fix the mower blade, **characterized by** a shield (22, 42) according to one or more of the preceding claims, which is fixed by means of the screw (28) on the fixing region (16) and covers this on at least one side.

6. A mower disc according to claim 5, **characterized in that** it is of oval shape and has two fixing regions (16) at diametrically opposite places of the periphery.

7. A mower disc according to claim 5 or 6, **characterized in that** the shield (22, 42) can be pushed on to the fixing region (16) radially inwards from the outside and has bores (24, 52, 54) which can be brought into alignment with a hole (20) in the plate body (12) and serve to receive the screw (28).

8. A mower disc according to any of claims 5 to 7, **characterized in that** the disc body (12) is formed from sheet metal and has radially extending fixing regions (16).

## Revendications

1. Bouclier (22, 42) avec montage amovible sur une zone de fixation (16) d'un disque de coupe (10), comprenant une forure (24) destinée à recevoir une vis (28), par laquelle une lame de coupe est assemblée avec un disque de coupe (10), comprenant un segment supérieur (44) et un segment inférieur (46), entre lesquels subsiste une ouverture, en particulier une fente (26), dans laquelle peut se loger la zone de fixation (16), comprenant une protection pour un bord extérieur radial de la zone de fixation (16) dans la zone de liaison entre le segment supérieur (44) et le segment inférieur (46) et comprenant un logement (34, 38, 58) pour au moins une partie de la vis (28).

2. Bouclier selon la revendication 1, **caractérisé en ce que** les deux segments (44, 46) sont conçus en une seule pièce.

3. Bouclier selon la revendication 1, **caractérisé en ce que** les deux segments (44, 46) sont conçus séparément.

4. Bouclier selon une ou plusieurs des revendications précédentes, **caractérisé en ce qu'**au moins un des segments (44, 46) comporte un logement hexagonal (38) destiné à bloquer en rotation la vis (28) ou un écrou (36) fixé sur la vis (28).

5. Disque de coupe (10) comprenant au moins une zone de fixation (16), au moins une lame de coupe et au moins une vis (28), qui passe à travers un trou (20) dans la zone de fixation (16) pour fixer la lame de coupe, **caractérisé par** un bouclier (22, 42) selon une ou plusieurs des revendications précédentes, qui est fixé au moyen de la vis (28) sur la zone de fixation (16) et couvre celle-ci au moins sur une face.

6. Disque de coupe selon la revendication 5, **caractérisé en ce qu'**il est ovale et comporte deux zones de fixation (16) dans deux emplacements diamétralement opposés de la périphérie.

7. Disque de coupe selon la revendication 5 ou 6, **caractérisé en ce que** le bouclier (22, 42) peut s'enficher sur la zone de fixation (16) dans le sens radial de l'extérieur vers l'intérieur et comporte des forures (24, 52, 54), qui peuvent être alignées avec un trou (20) réalisé dans le corps de disque (12) et sont destinées à recevoir la vis (28).

8. Disque de coupe selon une des revendications 5 à 7, **caractérisé en ce que** le corps de disque (12) est réalisé en tôle et comporte des zones de fixation (16) qui s'étendent dans le sens radial.
